(19) Europäisches Patentamt

European Patent Office

Office européen des brevets

(11) Veröffentlichungsnummer: **0 127 583**

**B1**

(12) **EUROPÄISCHE PATENTSCHRIFT**

(45) Veröffentlichungstag der Patentschrift:
10.08.88

(51) Int. Cl.⁴: **A 21 C 3/02**

(21) Anmeldenummer: **84810260.4**

(22) Anmeldetag: **25.05.84**

(54) Teigauswalzmaschine.

(30) Priorität: **27.05.83 CH 2918/83**

(43) Veröffentlichungstag der Anmeldung:
**05.12.84 Patentblatt 84/49**

(45) Bekanntmachung des Hinweises auf die Patenterteilung:
**10.08.88 Patentblatt 88/32**

(84) Benannte Vertragsstaaten:
**DE FR GB IT NL SE**

(56) Entgegenhaltungen:
**CH-A-480 800**
**CH-A-490 804**
**DE-B-1 145 113**
**DE-B-1 284 922**

(73) Patentinhaber: **Seewer AG, Maschinenfabrik, Heimiswilstrasse 42, CH- 3400 Burgdorf, Kanton Bern (CH)**

(72) Erfinder: **Morgenthaler, Eugen, Lerchenweg 2, CH- 3422 Kirchberg (CH)**
Erfinder: **Rolli, Jacques, Kanalweg 16, CH- 3422 Kirchberg (CH)**

(74) Vertreter: **Tschudi, Lorenz, Bovard AG Patentanwälte VSP Optingenstrasse 16, CH- 3000 Bern 25 (CH)**

**Beschreibung**

Die vorliegende Erfindung betrifft eine Teigauswalzmaschine mit mindestens zwei übereinanderliegenden, im Abstand einstellbaren Auswalzwalzen und Zu- und Wegführvorrichtungen zur Zuführung des auszuwalzenden Teiges zu den Auswalzwalzen und zur Wegführung des ausgewalzten Teiges von den Auswalzwalzen, wobei die Zu- und Wegführvorrichtungen beidseitig der Auswalzwalzen angeordnete, in ihrer Geschwindigkeit und Laufrichtung veränderliche, mit je einem Transportband versehene innere und äussere Transportbandwalzen umfassen.

Bei bekannten Teigauswalzmaschinen ist eine Überwachung durch einen Operateur notwendig, der die Teigdurchgänge unter den Auswalzwalzen beobachtet und mit einem Variator die Geschwindigkeit der Transportantriebswalzen reguliert. Diese Überwachung ist recht schwierig und anspruchsvoll, so dass es vorkommen kann, dass bei bekannten Teigauswalzmaschinen der Teig in die Auswalzwalzen gedrückt oder in dieselben hineingezerrt wird. Dies führt entweder zu einem Wellenschlagen des Teiges, was den Teig zerstören oder ein erneutes Auswalzen desselben notwendig macht, oder zu einem zu starken Strecken des Teiges, was zu einer Quereinschnürung führt, wodurch Ausschüsse bei der Weiterverarbeitung des Teiges entstehen.

Bei anderen bekannten Teigauswalzmaschinen wurde z. B. eine Regulierung der Walzengeschwindigkeiten mit einer Tänzer-Walze, d.h. einer federnd aufgehängten Walze, die in einer unteren und oberen Stellung einen Schalter betätigt, wobei diese Walze auf das Gewicht des Teiges anspricht, vorgenommen, was jedoch den Nachteil aufwies, dass die Regulierung nur bei einer bestimmten Teigbreite und -dicke funktionierte. Im weiteren musste bei diesen Auswalzmaschinen der Teig von Hand zugeführt werden. Dazuhin erfolgte die Arbeitsweise nur in einer Richtung.

Im weiteren ist aus der DE-B-1 145 113 eine Teigroll- und Walzmaschine mit übereinanderliegenden, im Abstand einstellbaren Teigwalzen und beidseitig der Walzen angeordneten, in ihrer Geschwindkeit und Laufrichtung veränderlichen Transportband walzen vorgesehen, wobei der Antrieb der Teigwalzen sowie der einzelnen Transportband walzen je über einen gesonderten Motor erfolgt, wobei die Motoren durch Polumschaltbarkeit oder durch je zwei Wicklungen mit gleicher oder verschiedener Geschwindigkeit betrieben werden können.

Es ist eine Aufgabe der vorliegenden Erfindung, eine Teigauswalzmaschine zu schaffen, bei der die Überwachung durch einen Operateur nicht mehr notwendig ist. Im weiteren sollen keine der obengenannten Fehler beim Teigausrollen vorkommen können. Im weiteren soll eine gleichmässige Teigqualität mit möglichst wenigen ṳ ﻻﺎﻨﺮ ... ... ᾳ ᾳit werden, wobei die Breite des ausgewalzten Teiges möglichst konstant sein soll. Im weiteren ist es eine Aufgabe, den Walzenspalt zwischen den Auswalzwalzen und die Geschwindigkeit der Zuführvorrichtung optimal zu steuern. Dies wird erfindungsgemäss erzielt durch die kennzeichnenden Merkmale des Patentanspruches 1.

Besondere Ausführungsformen der Erfindung ergeben sich aus den abhängigen Ansprüchen. Im folgenden wird anhand der beiliegenden Zeichnungen ein Ausführungsbeispiel der Erfindung näher beschrieben. Es zeigen:

Fig. 1 eine Gesamtansicht der Teigausrollmaschine,
Fig. 2 einen Schnitt durch die verschiedenen Walzen,
Fig. 3 eine schematische Darstellung des Antriebes der verschiedenen Walzen,
Fig. 4 eine Schutzeinrichtung mit Walzenabstreifer und oberer Auswalzwalze
Fig. 5 den aufklappbaren Endteil des Transportbandes,
Fig. 6 den Faltschlitten mit Antrieb,
Fig. 7 die Steuerung der Teigausrollmaschine,
Fig. 8 eine schematische Darstellung der einzelnen Positionen der oberen Auswalzwalze mit einem Teilschritt am Schluss,
Fig. 9 ein ähnliches Schema gemäss Fig. 8 jedoch mit einem ganzen Schritt am Schluss,
Fig. 10 ein Blockschema der Teiggeschwindigkeitsregelung.

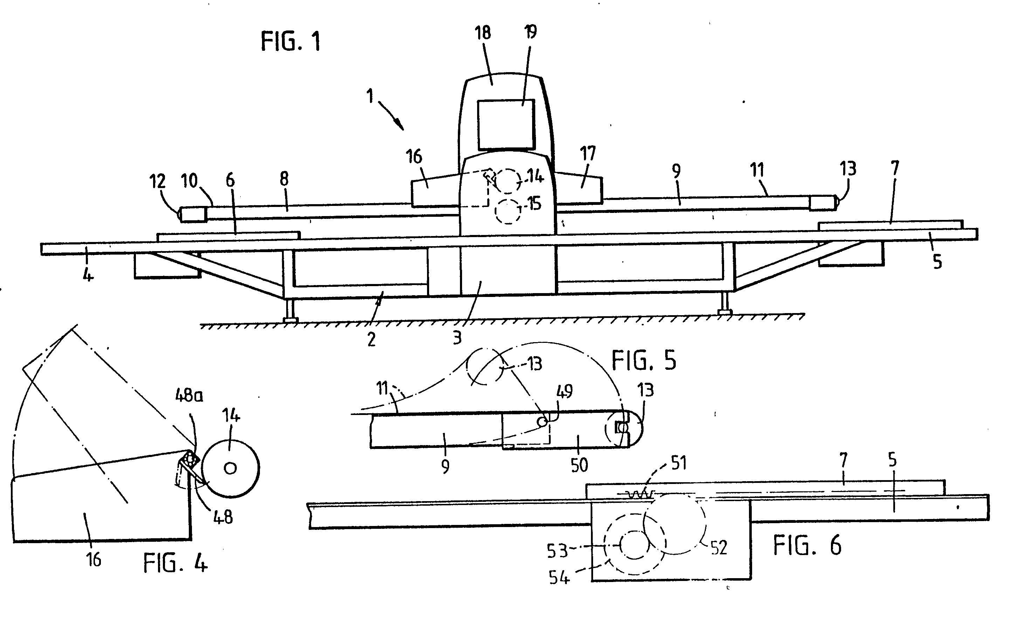

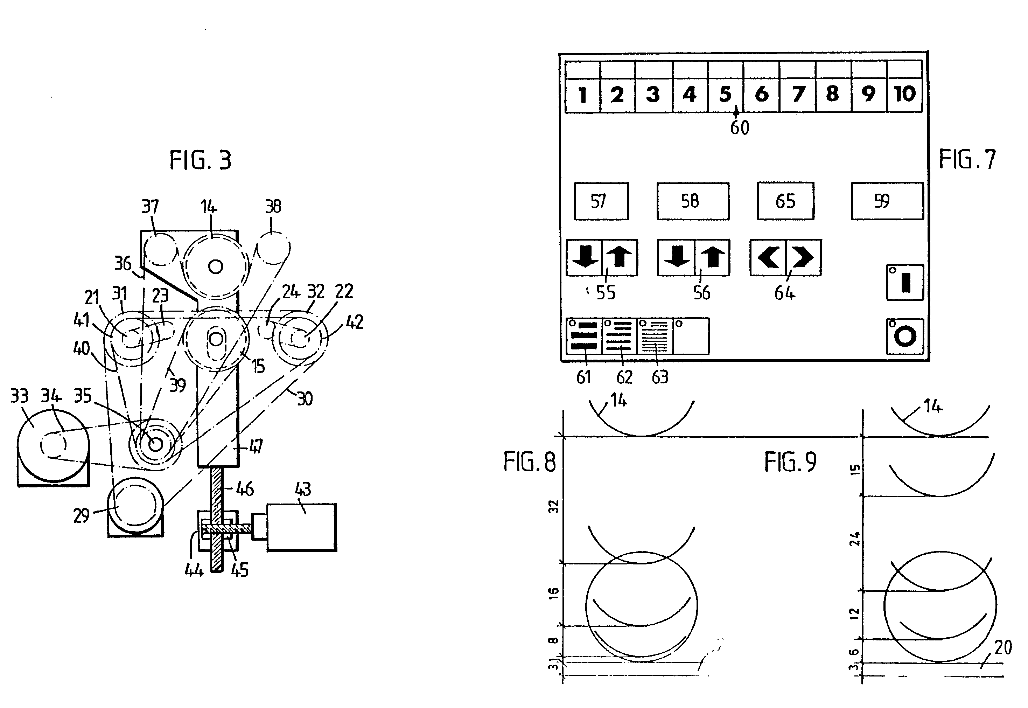

Gemäss Fig. 1 umfasst die Teigausrollmaschine 1 ein Gestell 2, an welchem ein Mittelteil 3 zur Aufnahme der Steuerung der verschiedenen Walzen vorgesehen ist. An den äusseren Enden 4 und 5 des Gestelles 2 sind Faltschlitten 6 und 7 vorgesehen. Am Mittelteil 3 sind zwei Tragkonstruktionen 8 und 9 für die Transportbänder 10 und 11 befestigt. Die Transportbänder 10 und 11 laufen über äussere Transportbandwalzen 12 und 13. Im Mittelteil 3 sind die obere Auswalzwalze 14 sowie die untere Auswalzwalze 15 gestrichelt dargestellt. Im Mittelteil sind ebenfalls die Handschutzeinrichtungen 16 und 17 vorgesehen, die mit der oberen beweglichen Auswalzwalze 14 in der Höhe verstellbar angeordnet sind. Im Teil 18 sind die Antriebsteile nach Fig. 3 und teilweise die elektrische Ausrüstung untergebracht. Über den Auswalzwalzen 14, 15 ist ein Mehlstäuber 19 vorgesehen.

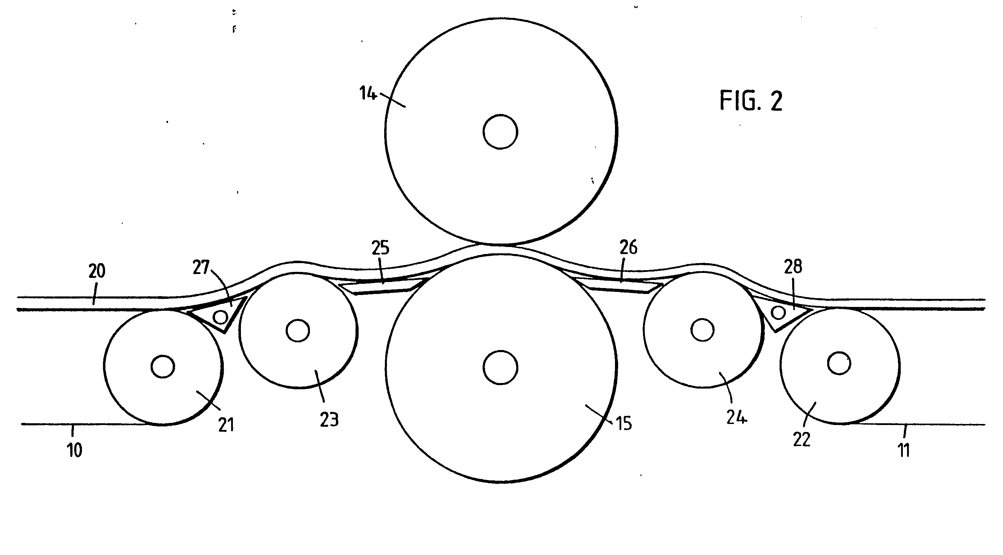

In Fig. 2 ist ein Schnitt durch die verschiedenen Walzen der Teigausrollmaschine dargestellt. Der Teig 20 wird gemäss Fig. 2 durch das über die eine innere Transportbandwalze 21 verlaufende Transportband 10 den Auswalzwalzen 14 und 15 zugeführt. Der ausgewalzte Teig wird über das über die andere innere Transportbandwalze 22 geführte Teigtransportband 11 weggeführt. Im weiteren sind zwischen den inneren Transportbandwalzen 21 und 22 und der unteren, in ihrer Lage festen Auswalzwalze 15 zwei Messwalzen 23 und 24 vorgesehen. Zwischen den Messwalzen 23 und 24 und der unteren Auswalzwalze 15 ist je ein fester Überleitteil 25 resp. 26 vorgesehen. Zwischen den inneren Transportbandwalzen 21 und 22 und den Messwalzen 23 und 24 ist je ein schwenkbarer Überleitteil 27 resp. 28 vorgesehen. Der schwenkbare Überleitteil 27 liegt bei der Durchlaufrichtung des Teiges von links nach rechts gemäss Fig. 2 an der Transportbandwalze 21 an, wobei der schwenkbare Überleitteil 28 bei dieser Durchlaufrichtung an der Messwalze 24 anliegt. Die beiden Lagen der schwenkbaren Überleitteile werden bei der Umkehrung der Durchlaufrichtung des Teiges vertauscht. Die schwenkbaren Überleitteile haben die Funktion, die Messwalzen sauber zu halten und den Teig von der Transportbandwalze auf die Messwalze resp. umgekehrt überzuleiten. Die festen Überleitteile 25 und 26 haben die Funktion, den Teig von der Messwalze auf die untere Auswalzwalze resp. von der Auswalzwalze auf die Messwalze überzuleiten. Die Messwalzen sind wahlweise an die Transportbandwalzen angekoppelt oder frei drehbar, je nach Durchlaufrichtung des Teiges. Die Drehgeschwindigkeit der Auswalzwalzen 14 und 15 ist fest eingestellt. Bei der Durchlaufrichtung des Teiges von links nach rechts gemäss Fig. 2 ist die Drehgeschwindigkeit der Transportbandwalze 22 fest, und diejenige der Transportbandwalze 21 variabel. Bei der umgekehrten Durchlaufrichtung des Teiges von rechts nach links gemäss Fig. 2 ist die Drehgeschwindigkeit der Transportbandwalze 21 fest und diejenige der Transportbandwalze 22 variabel. Die Messwalzen 23 und 24 haben nun die Funktion, die Einlaufgeschwindigkeit des Teiges zu messen, wobei mit dem gemessenen Wert die Geschwindigkeit der Transportbandwalzen 21 oder 22 je nach Teigdurchlaufrichtung reguliert werden kann. Die optimale Wahl des Verhältnisses der Geschwindigkeit der Transportbandwalze auf der Seite, auf welcher der Teig zugeführt wird zur Drehgeschwindigkeit der Auswalzwalzen ist sehr wichtig, um ein Wellenschlagen oder zu starkes Strecken des Teiges, was zu einer Quereinschnürung führt, zu vermeiden. Beim Wellenschlagen des Teiges ist die Geschwindigkeit der Messrolle kleiner und beim Hineinziehen des Teiges zwischen die Auswalzwalzen grösser als die Geschwindigkeit der entsprechenden Tansportbandwalze, die den Teig über die Messwalze den Auswalzwalzen zuführt.

In Fig. 3 ist der Antrieb der einzelnen Walzen schematisch dargestellt. Mit einem Gleichstrommotor 29 ist abwechslungsweise über eine der Transportbandwalzen 21, 22 das den Teig zuführende Band angetrieben. Der Antrieb erfolgt über einen Zahnriemen 30 und zwei Zahnscheiben 31 und 32. Die Messwalzen 23 resp. 24 sind jeweils an der Teigauslaufseite an die Transportbandwalze 21 resp. 22 angekoppelt. Über einen weiteren Motor 33 erfolgt der Antrieb der Auswalzwalzen 14 und 15 sowie der Transportbandwalze 21 resp. 22 auf der Teigauslaufseite. Mit einem Keilriemen 34 wird ein Vorgelege 35 angetrieben. Ein Zahnriemen 36 verläuft vom Vorgelege 35 über zwei Umlenkräder 37 und 38 über eine mit der oberen verstellbaren Auswalzwalze 14 drehfest verbundene Zahnscheibe. Das gemäss Fig. 3 linke Umlenkrad 37 ist mit der oberen Auswalzwalze 14 in der Höhe verstellbar. Ein Zahnriemen 39 treibt die untere Auswalzwalze 15 an. Über das Vorgelege wird weiterhin mit einem Zahnriemen 40 das jeweilige Auslaufband über die Transportbandwalze 21 resp. 22 angetrieben. Der Zahnriemen 40 verläuft über zwei mit der entsprechenden Tansportbandwalze über das Auslaufband gekoppelte Zahnscheiben 41 resp. 42, wobei die Zahnscheibe für das Auslaufband jeweils mit der entsprechenden Transportwalze gekoppelt ist. Mit einem Walzenzustellmotor 43 werden über eine Schnecke 44 ein Schneckenrad 45 und eine Spindel 46 und über eine Halterung 47 die obere verstellbare Auswalzwalze 14 in der Höhe verstellt.

In Fig. 4 ist die obere Auswalzwalze 14 mit der Handschutzvorrichtung 16 dargestellt. Mit der Handschutzvorrichtung 16 ist über ein drehflexibles Element 48a ein Walzenabstreifer 48 verbunden, welcher beim Aufklappen der Handschutzvorrichtung ausgeschwenkt wird, womit ein Reinigen des Abstreifers 48 ermöglicht wird. Die Handschutzvorrichtungen 16 und 17 werden in ihrer Position mit dem Höhenverstellen der oberen Auswalzwalze 14 ebenfalls verschoben, so dass, wenn der Spalt zwischen den beiden Walzen 14 und 15 so eng wird, dass Verletzungsgefahr beim Hineinstrecken einer Hand zwischen die Walzen besteht, die Schutzvorrichtungen 16 und 17 so tief über den Teigtransportbändern 10 und 11 liegen, dass keine Möglichkeit mehr besteht, mit der Hand die Walzen 14 und 15 zu berühren. Wenn die Handschutzvorrichtungen aufgeklappt werden, so wird der Antrieb der einzelnen Walzen automatisch ausgeschaltet.

In Fig. 5 ist dargestellt, wie das Ende der Tragkonstruktion 9 mit dem Transportband 11 zur Reinigung der Transportbandunterseite und der darunter liegenden Tragkonstruktion aufgeklappt werden kann. Um einen Drehpunkt 49 wird der Endteil 50 der Tragkonstruktion 9 für das Transportband 11 mit der äusseren Transportbandwalze 13 umgeklappt, wobei das Transportband 11 entspannt ist. Dieselbe Vorrichtung ist auch bei der gegenüberliegenden Transportbandeinrichtung 8, 10 und 12 vorgesehen.

In Fig. 6 ist der Antrieb des Faltschlittens 7 dargestellt. Der Faltschlitten 7 dient zur Aufnahme des ausgewalzten Teiges. Seine Bewegung nach aussen wird entsprechend dem Auswalzvorgang zentral gesteuert. Eine unten am Faltschlitten 7 vorgesehene Zahnstange 51 wird über zwei Zahnräder 52, 53 und einen schematisch dargestellten Gleichstrommotor 54 angetrieben. Derselbe Antrieb ist auch beim gegenüberliegenden Faltschlitten 6 vorgesehen.

Zur zentralen Steuerung der Teigausrollmaschine ist eine Elektronik mit einem Mikroprozessor, z. B. Intel 8048, vorgesehen. Die Geschwindigkeiten der Auswalzwalzen 14 und 15 sowie der jeweiligen Transportbandwalze des Transportbandes für den auslaufenden Teig sind fest, wobei die Geschwindigkeit des den Teig zuführenden Transportbandes durch die Messwalze 23 resp. 24 zentral geregelt wird. Ebenfalls wird die Verringerung des Walzenspaltes zwischen den beiden Auswalzwalzen 14 und 15 zentral gesteuert. Die Steuerung der Geschwindigkeit des einlaufenden Transportbandes durch die Messwalzen würde noch nicht die Abwendung eines Mikroprozessors bedingen. Sollen jedoch die einzelnen Schritte der oberen beweglichen Auswalzwalze 14 zur Verringerung des Walzenspaltes und damit Verringerung der Teigdicke bis zum letzten Schritt optimal gesteuert werden können, so ist ein Mikroprozessor notwendig. Ebenfalls wird die Bewegung der Faltschlitten 6 und 7, die den ausgerollten und in Falten auf diese Schlitten verbrachten Teig aufnehmen, zentral durch den Mikroprozessor gesteuert.

In Fig. 7 ist die Bedienungsvorrichtung für die zentrale Steuerung dargestellt. Mit Tasten 55 und 56 werden die obere und untere Begrenzung des Walzenspaltes eingestellt, wobei diese Begrenzungen in den Feldern 57 und 58 zum Beispiel durch Leuchtdioden angezeigt werden. Im Feld 59 wird der momentane Abstand der Walzen 14 und 15 angezeigt. Mit Tasten 61, 62 und 63 können verschiedene Abwalzgrade, zum Beispiel Verhältnis 1 : 2, 1 : 1,55, 1 : 1,3 gewählt werden.

Zu Beginn des Auswalzvorganges kann es wünschenswert sein, den Teig nur bis zu einer gewissen Länge auszuwalzen und ihn dann um 90° auf dem Transportband zu drehen, womit die endgültige Breite des ausgewalzten Teiges festgelegt werden kann. Diese anfängliche Länge resp. Breite des Teiges wird durch die Taste 64 eingestellt und auf einem Feld 65 ebenfalls zum Beispiel durch Leuchtdioden angezeigt. Mit den Tasten 55, 56, 61, 62, 63 und 64 können also Daten vorgewählt und als Programm zusammengefasst in einem der Plätze 1 - 10 (Tasten 60) gespeichert werden.

Durch eine nicht dargestellte, zwischen den Auswalzwalzen 14 und 15 diagonal angeordnete Lichtschranke wird das Einlaufen resp. Auslaufen des Teiges unter den Auswalzwalzen registriert. Die Geschwindigkeit der Auswalzwalzen 14 und 15 ist konstant. Es dient die zeit als Mass für die Länge des ausgewalzten Teiges. Auf diese Weise kann die erste ausgewalzte Länge, also die Sollbreite, gesteuert und vorgewählt werden.

Im weiteren dient die Lichtschranke zum Steuern des Ein- resp. Auskoppelns der Messwalzen 23 und 24.

Bei der Verminderung des Walzenspaltes zwischen den Auswalzwalzen 14 und 15 ist es wichtig, dass das Verhältnis der einzelnen Schritte der oberen Auswalzwalze 14 mit der zugehörigen Geschwindigkeit des den Teig zuführenden Transportbandes 10 oder 11 übereinstimmt. So muss zum Beispiel bei der Verringerung der Teigdicke auf die Hälfte die Geschwindigkeit des auslaufenden Transportbandes etwa doppelt so gross sein wie diejenige des einlaufenden Transportbandes.

In den Fig. 8 und 9 ist eine Verringerung des Walzenspaltes durch Herabsenken der oberen Auswalzwalze 14 jeweils auf die Hälfte dargestellt. Beim Beispiel in Fig. 8 ergibt sich aber am Ende nur ein Teilschritt, was zu einem Strecken des Teiges am Schluss führen wurde, falls das zuführende Transportband nicht entsprechend in der Geschwindigkeit gesteuert würde. Beim Beispiel in Fig. 9 wird am Anfang nur ein Teilschritt gewählt, wobei bei allen nächsten Schritten der Abwalzgrad 12 beträgt, also am Schluss ein ganzer Schritt zum Ausrollen des Teiges auf die Enddicke resultiert. Der Teilschritt am Anfang hat keinen nachteiligen Einfluss, da bei grosser Anfangsdicke und entsprechend geringer Länge des Teiges noch keine Störeffekte wie Wellenschlagen auftreten.

Das optimale Auswalzen des Teiges ist wichtig, da sonst entweder beim Wellenschlagen der Teig zerstört wird, oder bei der Einschnürung des Teigbandes in der Breite zu viel Abfall entstünde.

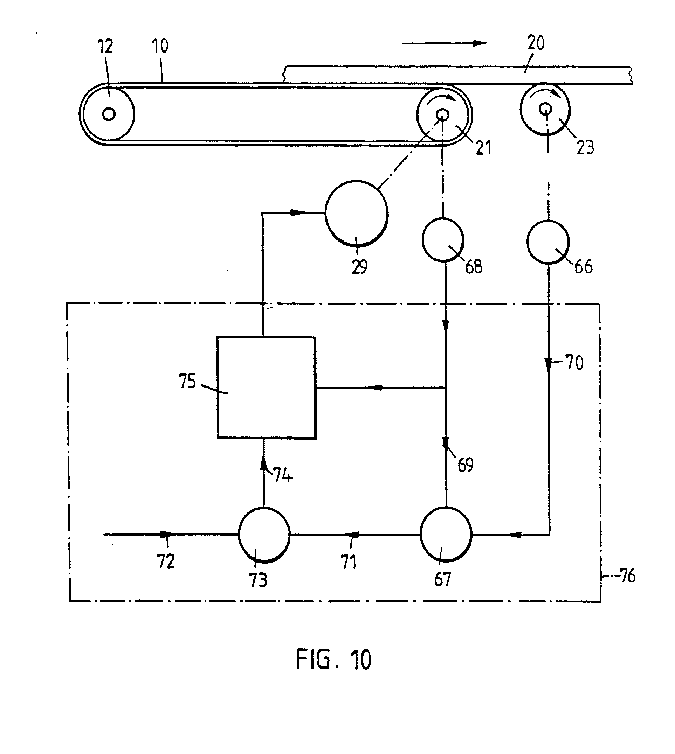

In Fig. 10 ist das Blockschema zur Regelung der Teiggeschwindigkeit auf dem einlaufenden Teigtransportband dargestellt. Ein mit der Messwalze 23 gekoppelter Messgeber 66 gibt pro Umdrehung der Messwalze ein Signal 70 ab, das an eine Vergleichsstelle 67 zum Vergleich der Geschwindigkeit des einlaufenden Transportbandes 10 und der durch die Messwalze aufgenommenen effektiven Teiggeschwindigkeit geleitet wird. Die Bandgeschwindigkeit des einlaufenden Transportbandes 10 wird über die Transportbandwalze 21 und einen Messwertgeber 68 an die Vergleichsstelle 67 weitergegeben. Die Vergleichsstelle 67 stellt also den Unterschied zwischen dem die Bandgeschwindigkeit repräsentierenden Signal 69 und dem die Teiggeschwindigkeit repräsentierenden Signal 70 fest. Mit dem den Unterschied repräsentierenden Signal 71 wird der Sollwert 72 über eine Korrekturstelle 73 korrigiert. Das korrigierte Sollwert-Signal 74 wird einem Regler 75 als Sollwert zugeleitet. Dieser Regler 75 regelt die Drehzahl des Bandantriebes 29 so, dass die Bandgeschwindigkeit des einlaufenden Teigtransportbandes 10 im richtigen Verhältnis zur Teiggeschwindigkeit steht. Die Vergleichsstelle 67, die Korrekturstelle 73 und der Regler 75 bilden Teile eines Mikroprozessors 76.

Die Regelung könnte mit nur einer Messwalze erfolgen bei einer Teigauswalzmaschine, welche mehrere hintereinander angeordnete Walzenpaare aufweist, und bei welcher der Teig in nur einem Durchgang ausgewalzt wird.

**Patentansprüche**

1. Teigauswalzmaschine (1) mit mindestens zwei übereinanderliegenden, im Abstand einstellbaren Auswalzwalzen (14, 15) und Zu- und Wegführvorrichtungen zur Zuführung des auszuwalzenden Teiges zu den Auswalzwalzen (14, 15) und zur Wegführung des ausgewalzten Teiges von den Auswalzwalzen (14, 15), wobei die Zu- und Wegführvorrichtungen beidseitig der Auswalzwalzen (14, 15) angeordnete in ihrer Geschwindigkeit und Laufrichtung veränderliche, mit je einem Transportband (10, 11) versehene innere und äussere Transportbandwalzen (12, 13; 21, 22) umfassen, gekennzeichnet durch mindestens eine Messwalze (23, 24) zur Messung der effektiven Geschwindigkeit des Teiges vor dessen Durchtritt durch die Auswalzwalzen (14, 15), wobei ein Mikroprozessor (76) vorgesehen ist zur Steuerung der Geschwindigkeit der Transportbandwalzen (21, 22) der Zuführvorrichtung in Abhängigkeit eines von der Messwalze (23, 24) über einen Messgeber (66) abgegebenen Signals sowie der Zustellschritte der oberen beweglichen Auswalzwalze (14).

2. Teigauswalzmaschine nach Patentanspruch 1, dadurch gekennzeichnet, dass zwischen mindestens einer Transortbandwalze (21, 22) der Messwalze (23, 24) ein schwenkbarer Überleitteil (27, 28) vorgesehen ist.

3. Teigauswalzmaschine nach einem der vorangehenden Patentansprüche, gekennzeichnet durch unterhalb der Zu- und Wegführvorrichtungen angeordnete Faltschlitten (6, 7) zur Aufnahme des ausgewalzten Teiges.

4. Teigauswalzmaschine nach einem der vorangehenden Patentansprüche, dadurch gekennzeichnet, dass die Messwalze (23, 24) mit der Transportbandwalze (21, 22) ankuppel- resp. abkuppelbar ausgebildet ist.

5. Teigauswalzmaschine nach einem der vorangehenden Patentansprüche, dadurch gekennzeichnet, dass zur Verschiebung der Faltschlitten (6, 7) eine Antriebsvorrichtung (51, 52, 53, 54) vorgesehen ist, welche ebenfalls durch den Mikroprozessor (76) gesteuert wird.

6. Teigauswalzmaschine nach einem der vorangehenden Patentansprüche, dadurch gekennzeichnet, dass Endteile (50) der Zu- und Wegführvorrichtungen mit den äusseren Transportbandwalzen (12, 13) umklappbar angeordnet sind.

7. Teigauswalzmaschine nach einem der vorangehenden Patentansprüche, dadurch gekennzeichnet, dass ein Abstreifer (48) über ein drehflexibles Element (48a) mit einer Handschutzeinrichtung (16, 17) verbunden ist.

**Claims**

1. Dough-sheeting machine (1) having at least two superimposed sheeting rollers (14, 15) adjustable in spacing, and feeding and carrying-away devices for feeding the dough to be sheeted to the sheeting rollers (14, 15) and for carrying the sheeted dough away from the sheeting rollers (14, 15), the feeding and carrying-away devices comprising inner and outer conveyor-belt rollers (12, 13; 21, 22), variable in their speed and direction of rotation and provided with one conveyor belt (10, 11) each, disposed on both sides of the sheeting rollers (14, 15), characterized by at least one measuring roller (23, 24) for measuring the actual speed of the dough before passage thereof through the sheeting rollers (14, 15), a microprocessor (76) being provided for controlling the speed of the conveyor-belt rollers (21, 22) of the feeding device as a function of a signal transmitted by the measuring roller (23, 24) via an encoder (66) as well as of the feed steps of the upper movable sheeting roller (14).

2. Dough-sheeting machine according to patent claim 1, characterized in that a swivellable transfer part (27, 28) is provided between at least one conveyor-belt roller (21, 22) and the measuring roller (23, 24).

3. Dough-sheeting machine according to one of the preceding patent claims, characterized by folding carriages (6, 7) disposed beneath the feeding and carrying-away devices for receiving the sheeted dough.

4. Dough-sheeting machine according to one of the preceding patent claims, characterized in that the measuring roller (23, 24) is designed capable of being coupled to and/or uncoupled from the conveyor-belt roller (21, 22).

5. Dough-sheeting machine according to one of the preceding patent claims, characterized in that a driving device (51, 52, 53, 54) which is likewise controlled by the microprocessor (76) is provided for displacing the folding carriages (6, 7).

6. Dough-sheeting machine according to one of the preceding patent claims, characterized in that end portions (50) of the feeding and carrying-away devices with the outer conveyor-belt rollers (12, 13) are disposed foldably.

7. Dough-sheeting machine according to one of the preceding patent claims, characterized in that a stripper (48) is connected via a rotationflexible element (48a) to a hand-protection contrivance (16, 17).

**Revendications**

1. Laminoir à pâte (1) comprenant au moins deux rouleaux de laminage (14, 15) situés l'un en-dessus de l'autre et réglables quant à leur distance, et des dispositifs d'amenée et d'emmènement pour amener la pâte à laminer aux rouleaux de laminage (14, 15) et pour emmener la pâte laminée de ces rouleaux de laminage (14, 15), les dispositifs d'amenée et d'emmènement étant disposés des deux côtés des rouleaux de laminage (14, 15), avec leurs vitesses et leurs directions de mouvements variables, chaque dispositif étant muni de bandes de transport (10, 11) qui passent autour de rouleaux de bande de transport intérieurs et extérieurs (12, 13; 21, 22), caractérisé par au moins un rouleau de mesure (23, 24) pour mesurer la vitesse effective de pâte avant son passage à travers les rouleaux de laminage (14, 15), un microprocesseur étant prévu pour la commande de la vitesse du rouleau de bande de transport (21, 22) du dispositif d'amenée en dépendance d'un signal délivré par le rouleau de mesure (23, 24) à l'aide d'un donneur de mesure (66), de même que pour la commande des pas de réglage du rouleau de laminage supérieur, mobile (14).

2. Laminoir à pâte selon la revendication 1, caractérisé en ce qu'une partie de conduite et de support (27, 28) est prévue au moins entre un des rouleaux de bande de transport (21, 22) et le rouleau de mesure (23, 24).

3. Laminoir à pâte selon une des revendications précédentes, caractérisé par des chariots à plis (6, 7) disposés au-dessous des dispositifs d'amenée et d'emmènement, pour la réception de la pâte laminée.

4. Laminoir à pâte selon une des revendications précédentes, caractérisé en ce que le rouleau de mesure (23, 24) est agencé de façon à pouvoir être couplé avec le rouleau de bande de transport (21, 22).

5. Laminoir à pâte selon une des revendications précédentes, caractérisé en ce qu'un dispositif d'entraînement (51, 52, 53, 54) est prévu pour le déplacement des chariots à plis (6, 7), lequel est également commandé par le microprocesseur (76).

6. Laminoir à pâte selon une des revendications précédentes, caractérisé en ce que les parties d'extrémités (50) des dispositifs d'amenée et d'emmènement sont agencées avec les rouleaux de bande de transport extérieures (12, 13) rabattables.

7. Laminoir à pâte selon une des revendications précédentes, caractérisé en ce qu'un racloir (48) est lié par un élément flexible en rotation (48a) avec un dispositif de protection des mains (16, 17).

FIG. 1

FIG. 4

FIG. 5

FIG. 6

0 127 583

FIG. 2

0 127 583

FIG. 3

FIG. 7

FIG. 8    FIG. 9

0 127 583

FIG. 10